# EUROPEAN PATENT SPECIFICATION

(11) **EP 4 113 246 B1**
(45) Date of publication and mention of the grant of the patent: **06.08.2025**
(21) Application number: 21781426.8
(22) Date of filing: 26.03.2021
(51) Int. Cl.: G06F 1/16, A45C 11/00, A45C 13/00, H04M 1/04, H04M 1/18

(54) **ACCESSORY-MOUNTABLE ELECTRONIC DEVICE**
AN EINEM ZUBEHÖR MONTIERBARE ELEKTRONISCHE VORRICHTUNG
DISPOSITIF ÉLECTRONIQUE SUR LEQUEL PEUVENT ÊTRE MONTÉS DES ACCESSOIRES

(30) Priority: 31.03.2020 KR 20200038916
(43) Date of publication of application: 04.01.2023
(73) Proprietor: Samsung Electronics Co., Ltd., Gyeonggi-do 16677 (KR)
(72) Inventor: LEE, Sangyup, Suwon-si, Gyeonggi-do 16677 (KR); KIM, Beommun, Suwon-si, Gyeonggi-do 16677 (KR); OH, Dongyoon, Suwon-si, Gyeonggi-do 16677 (KR); SEO, Pilwon, Suwon-si, Gyeonggi-do 16677 (KR); LEE, Jiwoo, Suwon-si, Gyeonggi-do 16677 (KR)
(74) Representative: HGF
(86) International application number: PCT/KR2021/003783
(87) International publication number: WO 2021/201512

(56) References cited:
- WO-A1-2014/198208
- WO-A1-2018/216981
- WO-A1-2019/074477
- KR-A- 20140 139 169
- KR-B1- 101 905 046
- US-A1- 2017 017 273
- US-A1- 2020 089 276
- US-B2- 9 075 566
- US-B2- 9 141 136

## Description

### [Technical Field]

Various embodiments disclosed herein relate to an accessory-mountable electronic device.

### [Background Art]

A cover-type accessory may be used to protect an electronic device including a display. The cover accessory may cover and protect the display of the electronic device, and may be folded so as to support the electronic device at a predetermined angle.

The cover accessory may be used to retain the electronic device at a predetermined angle such that users can watch images, search for information, and conduct various other operations.

The electronic device may be fixed to the cover accessory in various methods. For example, the electronic device may be fixed to the cover accessory by the attractive force between a magnet inside the electronic device and another magnet inside the cover accessory.

WO2014/198208 A1 discloses a tablet-form electronic device equipped with a screen cover.

US2020/0089276 A1 discloses a magnetic layout in an electronic device and accessory devices for electronic devices, where the accessory devices may include a keyboard and a cover rotatable with respect to the keyboard.

### [Disclosure of Invention]

### [Technical Problem]

When the electronic device is supported while being inclined at a predetermined angle, a surface of the electronic device and a surface of the cover accessory may face each other at an oblique angle. The magnet of the electronic device and the magnet of the cover accessory may obliquely face other in such a state. As a result, attractive forces between the magnets may act in deviating directions, and the electronic device may thus slip without being stably fixed to the cover accessory.

In addition, a stylus pen for input inputs may be magnetically attached to the electronic device in some cases. If the magnet disposed on the electronic device to fix the cover accessory so as to cover the display of the electronic device is erroneously used to attach the stylus pen, the stylus pen may be incorrectly attached to a side surface of the electronic device. As a result, the stylus pen may fail to be stably attached to the electronic device.

It is an aspect of various embodiments disclosed herein to provide an electronic device capable of solving the above-mentioned problems.

### [Solution to Problem]

An electronic device according to claim 1 is provided.

An electronic device according to various embodiments disclosed herein may include a housing mounted to a mounting plate of a cover accessory and including a first side surface and a second side surface which is at least one of remaining side surfaces excluding the first side surface, a display disposed in the housing such that at least a partial area thereof is visible through a front surface of the housing, which is substantially perpendicular to the first side surface, a closing magnet disposed adjacent to the front surface of the housing to fix the cover accessory to the housing in a closed state, and a pen attachment magnet disposed adjacent to the second side surface of the housing so that a stylus pen is fixed to the side surface of the housing, wherein the closed state is a state in which the cover plate of the cover accessory covers the front surface of the housing.

### [Advantageous Effects of Invention]

According to various embodiments disclosed herein, when an electronic device is supported at a predetermined angle by a cover accessory, the electronic device may be stably fixed to the cover accessory. This may prevent the electronic device from slipping away from the cover accessory.

In addition, a stylus pen may be stably attached to a side surface of the electronic device.

### [Brief Description of Drawings]

In connection with the description of the drawings, the same or similar reference numerals may be used for the same or similar components.
FIG. 1 is a block diagram of an electronic device in a network environment according to various embodiments.
FIG. 2A is a perspective view of an electronic device in a standing state according to various embodiments disclosed herein.
FIG. 2B is a perspective view of the electronic device in a closed state illustrated in FIG. 2A.
FIG. 3 is a view illustrating a magnet included in an electronic device according to various embodiments disclosed herein.
FIG. 4A is a schematic view illustrating an arrangement of a standing magnet of an electronic device in a standing state according to various embodiments disclosed herein.
FIG. 4B is a cross-sectional view of a component adjacent to a standing magnet of an electronic device according to various embodiments disclosed herein.
FIG. 5A is a view illustrating an arrangement of a standing magnet according to various embodiments disclosed herein.
FIG. 5B is a schematic view illustrating an arrangement of a first standing magnet and a second standing magnet of an electronic device in a first standing state and a second standing state according to various embodiments disclosed herein.
FIG. 5C is a cross-sectional view of a first standing magnet and a component adjacent thereto of an electronic device according to various embodiments disclosed herein.
FIG. 5D is a cross-sectional view of a second standing magnet and a component adjacent thereto of an electronic device according to various embodiments disclosed herein.
FIG. 5E is a cross-sectional view of a standing magnet and a component adjacent thereto of an electronic device according to various embodiments disclosed herein.
FIG. 6A is a view illustrating an arrangement of a closing magnet and a pen attachment magnet according to various embodiments disclosed herein.
FIG. 6B is a cross-sectional view of a component adjacent to a closing magnet according to various embodiments disclosed herein.
FIG. 6C is a cross-sectional view of a component adjacent to a pen attachment magnet according to various embodiments disclosed herein.

### [Mode for the Invention]

It should be appreciated that various embodiments of the disclosure and the terms used therein are not intended to limit the technological features set forth herein to particular embodiments and include various changes, equivalents, or replacements for a corresponding embodiment.

With regard to the description of the drawings, similar reference numerals may be used to refer to similar or related elements. It is to be understood that a singular form of a noun corresponding to an item may include one or more of the things, unless the relevant context clearly indicates otherwise.

As used herein, each of such phrases as "A or B", "at least one of A and B", "at least one of A or B", "A, B, or C", "at least one of A, B, and C", and "at least one of A, B, or C" may include any one of, or all possible combinations of the items enumerated together in a corresponding one of the phrases. As used herein, such terms as "1st" and "2nd", or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with", "coupled to", "connected with", or "connected to" another element (e.g., a second element), it means that the element may be coupled with the other element directly (e.g., wiredly), wirelessly, or via a third element.

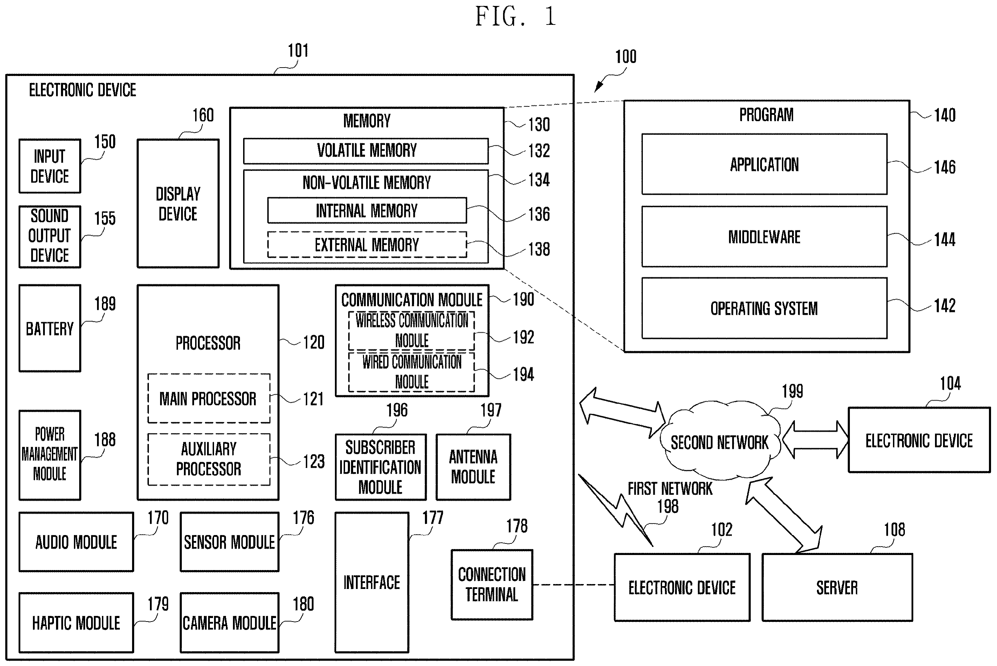

FIG. 1 is a block diagram illustrating an electronic device 101 in a network environment 100 according to various embodiments. Referring to FIG. 1, the electronic device 101 in the network environment 100 may communicate with an electronic device 102 via a first network 198 (e.g., a short-range wireless communication network), or an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input device 150, a sound output device 155, a display device 160, an audio module 170, a sensor module 176, an interface 177, a haptic module 179, a camera module 180, a power management module 188, a battery 189, a communication module 190, a subscriber identification module(SIM) 196, or an antenna module 197. In some embodiments, at least one (e.g., the display device 160 or the camera module 180) of the components may be omitted from the electronic device 101, or one or more other components may be added in the electronic device 101. In some embodiments, some of the components may be implemented as single integrated circuitry. For example, the sensor module 176 (e.g., a fingerprint sensor, an iris sensor, or an illuminance sensor) may be implemented as embedded in the display device 160 (e.g., a display).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may load a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), and an auxiliary processor 123 (e.g., a graphics processing unit (GPU), an image signal processor (ISP), a sensor hub processor, or a communication processor (CP)) that is operable independently from, or in conjunction with, the main processor 121. Additionally or alternatively, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display device 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123.

The memory 130 may store various data used by at least one component (e.g., the processor 120 or the sensor module 176) of the electronic device 101. The various data may include, for example, software (e.g., the program 140) and input data or output data for a command related thererto. The memory 130 may include the volatile memory 132 or the non-volatile memory 134.

The program 140 may be stored in the memory 130 as software, and may include, for example, an operating system (OS) 142, middleware 144, or an application 146.

The input device 150 may receive a command or data to be used by other component (e.g., the processor 120) of the electronic device 101, from the outside (e.g., a user) of the electronic device 101. The input device 150 may include, for example, a microphone, a mouse, a keyboard, or a digital pen (e.g., a stylus pen). The input device 150 may receive a command via the user's voice. The input device 150 may be a multi-microphone device corresponding to a 360-degree direction so as to recognize a voice generated in the vicinity of the electronic device 101.

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to one embodiment, the connection terminal 178 may include, for example, an HDMI connector, a USB connector, an SD card connector, a display port (DP), or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC). Power supplied to the electronic device 101 may be supplied in a wired or wireless manner. For example, the electronic device 101 may include a wireless charging module (not shown) to wirelessly receive power. The wireless charging module may be a device configured to receive power by a magnetic induction method or a resonance induction method. The wireless charging module may include a wireless charging coil in which a conductive metal wire is wound.

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as BluetoothTM, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197. According to various embodiments, the antenna module 197 may transmit and receive a 5G communication signal so that the electronic device 101 can support 5G communication. For example, the antenna module 197 may transmit and receive signals in several gigahertz bands and several tens to several hundreds of gigahertz bands (e.g., mmWave). The antenna module may include a plurality of antennas (e.g., a plurality of patch array antennas) to generate an RF beam.

At least some of the above-described components may be coupled mutually and communicate signals (e.g., commands or data) therebetween via an interperipheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 and 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, or client-server computing technology may be used, for example.

Hereinafter, the same or substantially the same component will be described using the same reference numerals.

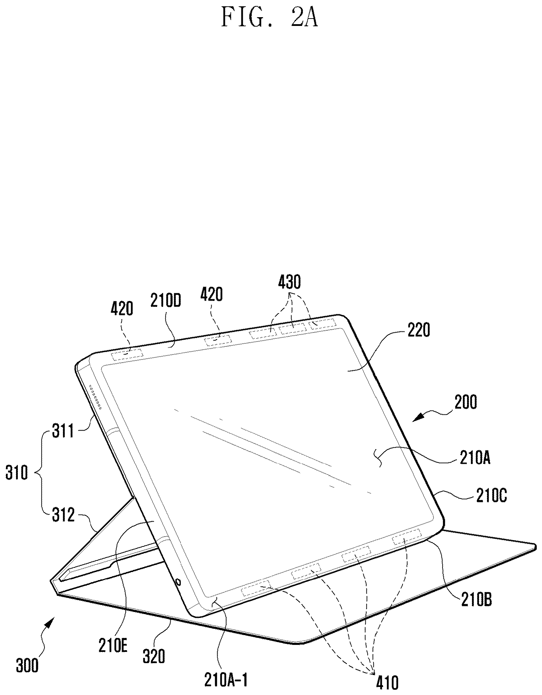

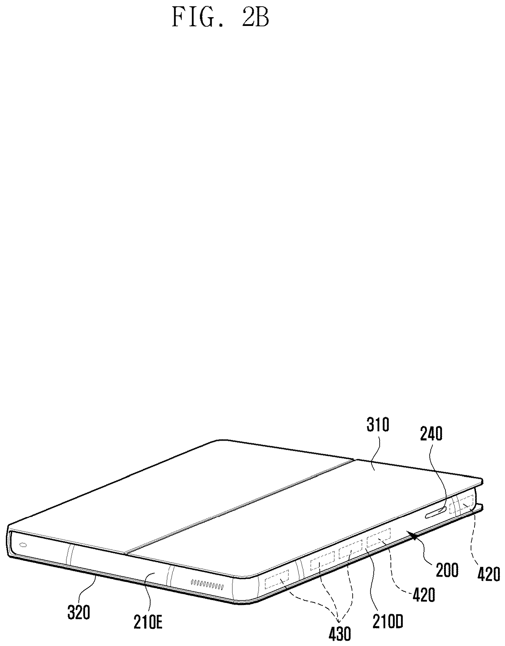

FIG. 2A is a perspective view of an electronic device in a standing state according to various embodiments disclosed herein, and FIG. 2B is a perspective view of the electronic device in a closed state illustrated in FIG. 2A.

According to various embodiments, an electronic device 200 (e.g., the electronic device 101 in FIG. 1) disclosed herein may include a housing 210 and a display 220 (e.g., the display device 160 in FIG. 1). The display 220 may be arranged in the housing 210 such that at least a partial area thereof is exposed to a front surface 210A of the housing 210. Here, the front surface 210A may mean a direction in which information is displayed on the display 220.

According to various embodiments, the electronic device 200 disclosed herein may be coupled to a foldable cover accessory 300. The cover accessory 300 may include a mounting plate 310 and a cover plate 320 foldably connected to the mounting plate 310. The mounting plate 310 may be configured to be mounted on the housing 210 of the electronic device 200. For example, the mounting plate 310 may be configured to cover the rear surface of the electronic device 200. Here, the rear surface may be a surface facing the front surface 210A of the electronic device 200. The mounting plate 310 may include a first mounting plate 311 and a second mounting plate 312 which are foldably connected to each other. According to various embodiments, on the rear surface of the electronic device 200, a magnet (not illustrated) for fixing the first mounting plate 311 to the rear surface thereof may be arranged.

According to various embodiments, according to the state in which the mounting plate 310 is folded with respect to the cover plate 320, the electronic device 200 is switched between the closed state (e.g., the state illustrated in FIG. 2B) and the standing state (e.g., the state illustrated in FIG. 2A). For example, as illustrated in FIG. 2B, the closed state may be a state in which the cover plate 320 covers the front surface 210A of the housing 210 of the electronic device 200. The cover plate 320 may cover the display 220 in a state in which the cover plate 320 covers the front surface 210A of the housing 210. Likewise, in the closed state, the cover plate 320 may cover the display 220 and protect the display 220. As illustrated in FIG. 2A, the standing state may mean a state in which the electronic device 200 is inclined at a predetermined angle with respect to the cover plate 320. At least a partial area of the mounting plate 310 in the standing state may support the housing 210 of the electronic device 200 so that the electronic device 200 and the cover plate 320 are maintained at a predetermined angle. For example, as illustrated in FIG. 2A, in the standing state, the second mounting plate 312 may be folded with respect to the first mounting plate 311. The second mounting plate 312 may support the housing 210 of the electronic device 200 in an inclined state so that the electronic device 200 and the cover plate 320 are maintained at a predetermined angle.

According to various embodiments, a standing magnet 410, a closing magnet 420, and a pen attachment magnet 430 may be arranged in the housing 210 of the electronic device 200. For example, the standing magnet 410 may be arranged adjacent to a first side surface 210B which is in contact with the cover plate 320 of the cover accessory 300 in the standing state (e.g., the state in FIG. 2A). A pogo-type contact PADs (not illustrated) for power and data transmission to an external electronic device (e.g., a book cover keyboard) may be disposed on the first side surface 210B. The closing magnet 420 may be disposed adjacent to the front surface 210A of the electronic device, which is in contact with the cover plate 320 in the closed state (e.g., the state in FIG. 2B). The pen attachment magnet 430 may be disposed adjacent to one side surface 210D of the housing 210. The side surface 210D in which the pen attachment magnet 430 is disposed may be one of the side surfaces other than the first side surface 210A in which the standing magnet 410 is disposed. A power button 240 of the electronic device 200 may be disposed on the second side surface 210D of the housing 210 in which the pen attachment magnet 430 is disposed.

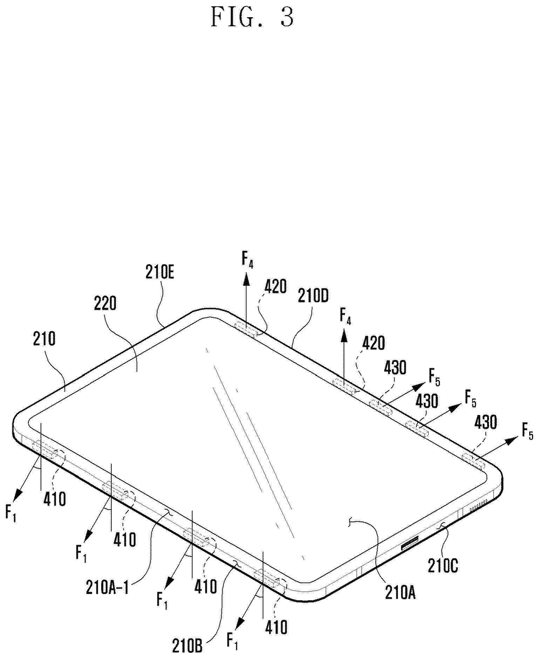

FIG. 3 is a view illustrating a magnet included in an electronic device according to various embodiments disclosed herein.

The "magnetic force direction" referred to below may mean a direction in which a magnet (e.g., the standing magnet in FIG. 2A, and the closing magnet and the pen attachment magnet in FIG. 2B) acts substantially perpendicular to a surface facing an adjacent magnet or magnetic material.

According to various embodiments, a magnet may be disposed in the housing 210 of the electronic device 200. The magnet may be a substantially hexahedral magnet. For example, the magnet may be a rod magnet or an array magnet in which a plurality of cubic magnets are assembled. The magnet may be disposed on at least one of the side surfaces 210B, 210C, 210D, and 210E of the housing 210. The side surfaces 210B, 210C, 210D, and 210E of the housing 210 may mean a surface substantially perpendicular to the front surface 210A of the housing 210 in which the display 220 is disposed.

According to various embodiments, the magnet disposed in the electronic device 200 may be at least one of the standing magnet 410, the closing magnet 420, and the pen attachment magnet 430. The standing magnet 410 may be disposed on the first side surface 210B of the housing 210 which is in contact with the cover plate 320 in the standing state. The closing magnet 420 and the pen attachment magnet 430 may be disposed on at least one of the side surfaces 210C, 210D, and 210E excluding the first side surface 210B, among the four side surfaces 210B, 210C, 210D, and 210E present in the housing 210. According to various embodiments, the closing magnet 420 and the pen attachment magnet 430 may be disposed on the same side surface 210D. For example, the closing magnet 420 and the pen attachment magnet 430 may be disposed on the second side surface 210D parallel to the first side surface 210B. The arrangement of the standing magnet 410, the closing magnet 420, and the pen attachment magnet 430, illustrated in FIG. 3, is merely an example, and the arrangement of the magnets may be variously changed. For example, the closing magnet 420 and the pen attachment magnet 430 may be arranged on different side surfaces. The closing magnet 420 and the pen attachment magnet 430 may be aligned to have polarities opposite to each other. In addition, the number of magnets is also not limited to that illustrated in FIG. 3. The number of standing magnets 410, closing magnets 420, and pen attachment magnets 430 may be variously changed as needed. According to various embodiments, the standing magnet 410, the closing magnet 420, and the pen attachment magnet 430 may be arranged in a portion 210A-1 in which the display 220 is invisible in the housing 220. The portion in which the display 220 is invisible may be a bezel portion of the electronic device 200.

According to various embodiments, the standing magnet 410 may be disposed so that the direction of a magnetic force F₁ thereof is inclined with respect to the side surface. A magnetic force direction F₄ of the closing magnet 420 and a magnetic force direction F₅ of the pen attachment magnet 430 may be perpendicular to each other. In some cases, in the closed state (e.g., the state in FIG. 2B), a magnetic force may act between the pen attachment magnet 430 and the cover plate 320. The pen attachment magnet 430 may perform the same function as the closing magnet in the closed state.

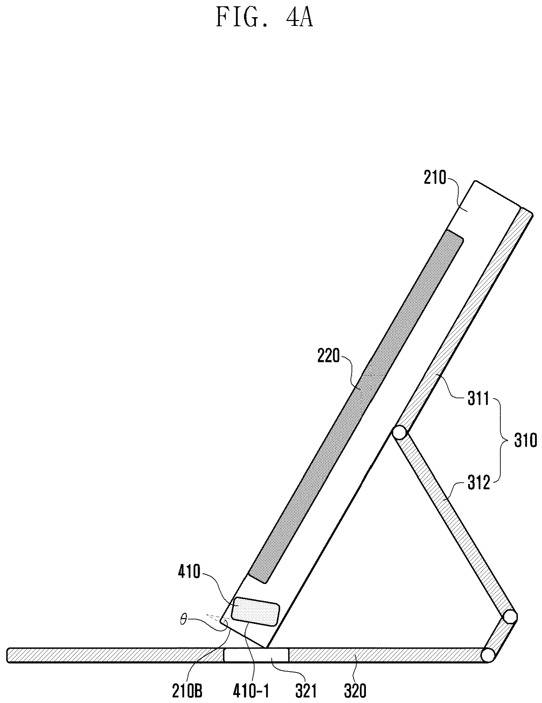

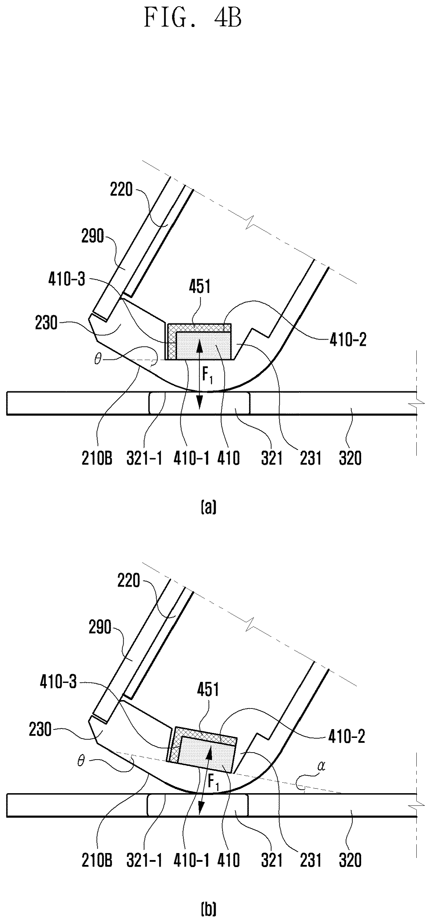

FIG. 4A is a schematic view illustrating an arrangement of a standing magnet 410 of an electronic device in a standing state according to various embodiments disclosed herein, and FIG. 4B is a cross-sectional view of a component adjacent to a standing magnet of an electronic device according to various embodiments disclosed herein.

According to various embodiments, in the standing state of the electronic device 200, the standing magnet 410 may be arranged such that one surface thereof is inclined with respect to the first side surface 210B of the electronic device 200, on which the standing magnet 410 is disposed. For example, if one surface of the standing magnet 410 is a surface 410-1 facing the first side surface 210B, as illustrated in FIG. 4A, one surface 410-1 of the standing magnet 410 may be inclined at an angle θ with respect to the first side surface 210B.

According to various embodiments, a seating portion 230 may be disposed at a position adjacent to the first side surface 210B. Referring to FIG. 4B, the seating portion 230 may include a seating groove 231 in which the standing magnet 410 is seated. The seating groove 231 may be a groove concavely formed in the seating portion 230. The seating groove 231 may be configured to be inclined with respect to the first side surface 210B. As the standing magnet 410 is seated in the seating groove 231 configured to be inclined to the first side surface 210B, the standing magnet 410 may be disposed to be inclined with respect to the first side surface 210B.

According to various embodiments, in the standing state as illustrated in FIG. 4A and FIG. 4B, the first side surface 210B of the housing 210 may be in contact with the cover plate 320 of the cover accessory 300. In such a state, the standing magnet 410 may be disposed at a position adjacent to a cover magnetic body 321 disposed on the cover plate 320. The magnetic force F₁ between the standing magnet 410 and the cover magnetic body 321 may prevent the first side surface 210B from slipping on the cover plate 320.

According to various embodiments, as illustrated in (a) of FIG. 4B, the standing magnet 410 disposed in an inclined state with respect to the first side surface 210B of the housing 210 may be substantially parallel to the cover magnetic body 321 in the standing state. One surface 410-1 of the standing magnet 410 adjacent to the cover magnetic body 321 and one surface 321-1 of the cover magnetic body 321 adjacent to the standing magnet 410 may be arranged substantially parallel to each other. In this state, the direction of the magnetic force F₁ acting between the cover magnetic body 321 and the standing magnet 410 may be substantially perpendicular to the cover plate 320.

According to various embodiments, as illustrated in (b) of FIG. 4B, one surface 410-1 of the standing magnet 410 and one surface 321-1 of the cover magnetic body 321 may form an angle of α. For example, the angle of α may be from about 0 degrees to 15 degrees.

In this way, since the standing magnet 410 is disposed substantially parallel to the cover magnetic body 321 in the standing state, the first side surface 210B of the housing 210 may be stably fixed to the cover plate 320 without slipping.

According to various embodiments, the standing magnet 410 may include a shielding member 451 configured to shield at least a partial area of the standing magnet 410. The shielding member 451 may be made of a material capable of blocking magnetic force. The shielding member 451 may be made of, for example, a material such as steel plate cold commercial (SPCC). The shielding member 451 may shield the magnetic force of the standing magnet 410 so that the magnetic force of the standing magnet 410 does not affect the electronic components and the display 220 included in the electronic device 200. For example, as illustrated in FIG. 4B, the shielding member 451 may be disposed to cover a surface 410-2 facing the center of the electronic device 200 and a surface 410-3 adjacent to the display 220 in the standing magnet 410.

According to various embodiments, as illustrated in FIG. 4B, a window 290 may be disposed on the upper surface of the display 220 of the electronic device 200 to protect the display 220.

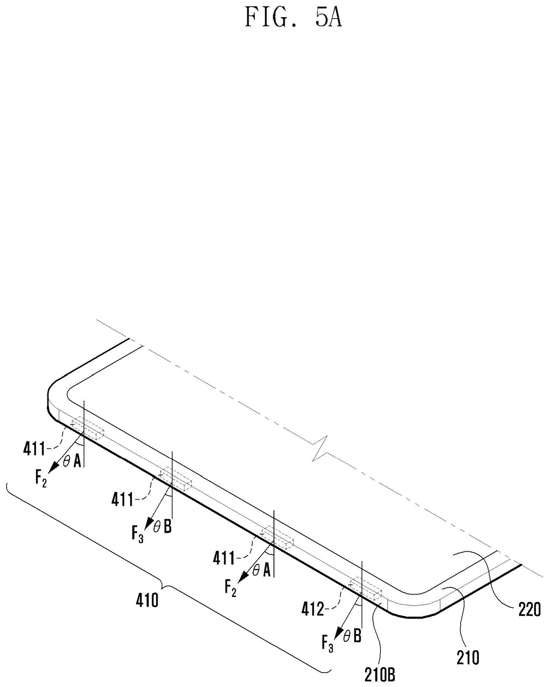

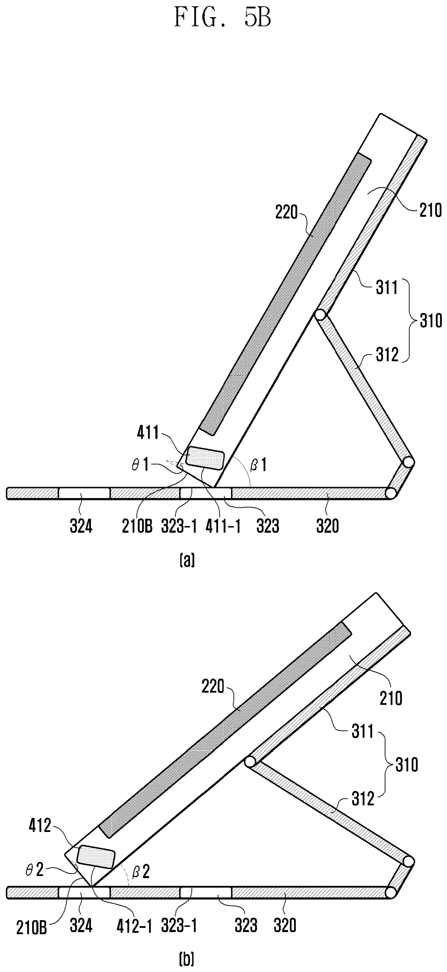

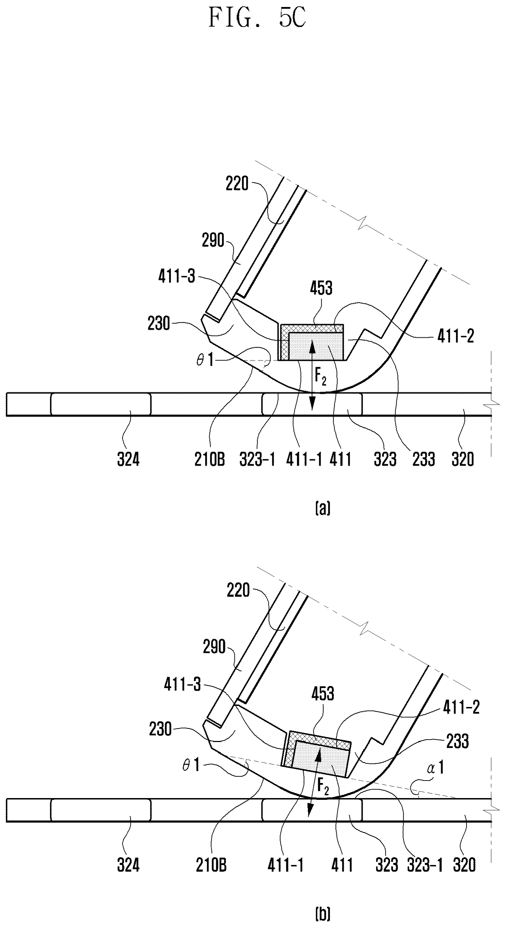

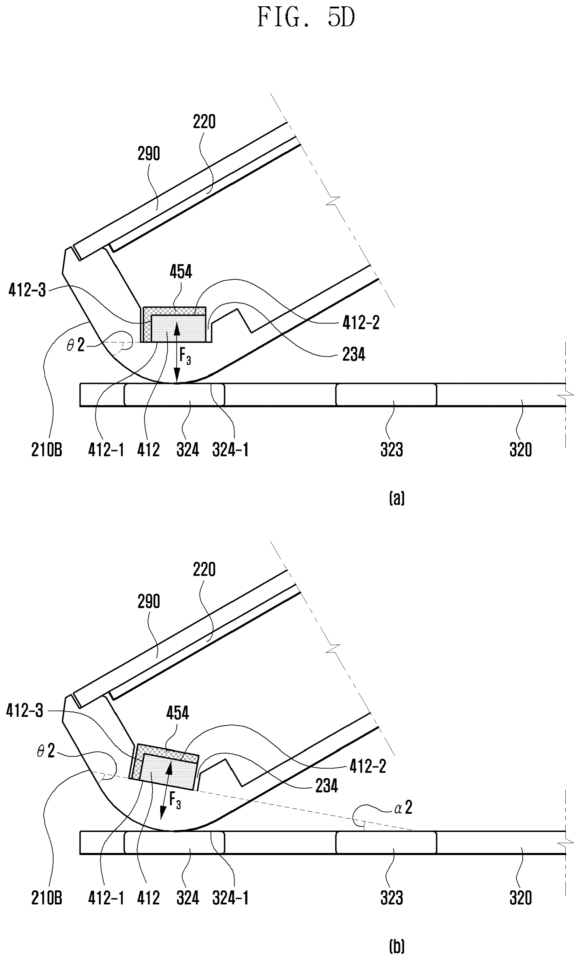

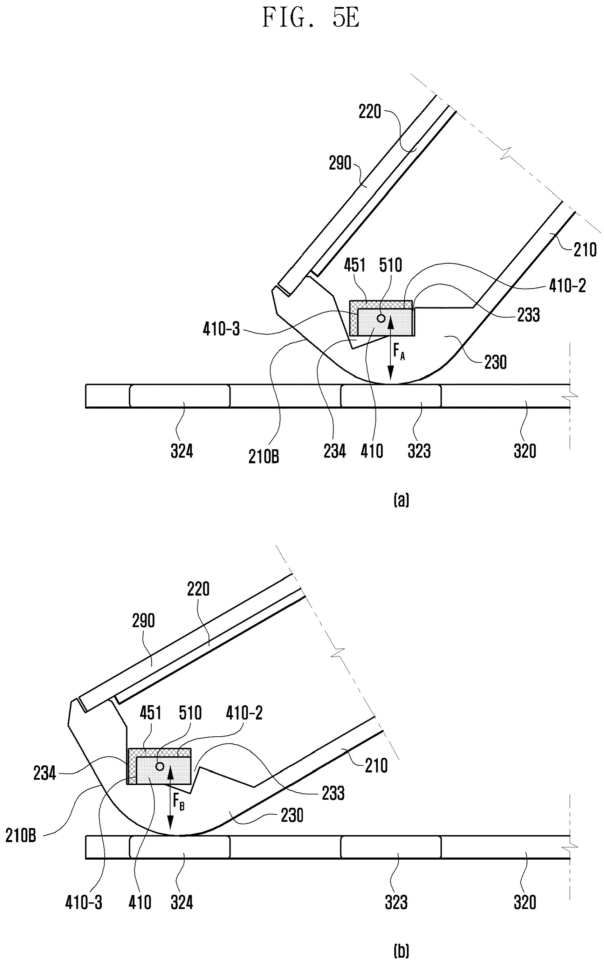

FIG. 5A is a view illustrating an arrangement of a standing magnet according to various embodiments disclosed herein, FIG. 5B is a schematic view illustrating an arrangement of a first standing magnet and a second standing magnet of an electronic device in a first standing state and a second standing state according to various embodiments disclosed herein, FIG. 5C is a cross-sectional view of a first standing magnet and a component adjacent thereto of an electronic device according to various embodiments disclosed herein, FIG. 5D is a cross-sectional view of a second standing magnet and a component adjacent thereto of an electronic device according to various embodiments disclosed herein, and FIG. 5E is a cross-sectional view of a standing magnet and a component adjacent thereto of an electronic device according to various embodiments disclosed herein.

According to various embodiments, the standing magnet 410 of the electronic device 200 may include a first standing magnet 411 and a second standing magnet 412. As illustrated in FIG. 5A, both the first standing magnet 411 and the second standing magnet 412 may be arranged adjacent to the first side surface 210B of the housing 210. For example, the two first standing magnets 411 and the second standing magnets 412 may be arranged alternately along the extending direction of the first side surface 210B, respectively. The first standing magnet 411 and the second standing magnet 412 may be arranged to be inclined with respect to the first side surface 210B. The direction of a magnetic force F₂ of the first standing magnet 411 and the direction of a magnetic force F₃ of the second standing magnet 412 may be different. The angle θ_{A} formed by the first side surface 210B and the direction of the magnetic force F₂ of the first standing magnet 411 may be greater than the angle θ_{B} formed by the first side surface 210B and the direction of the magnetic force F₃ of the second standing magnet 412.

According to various embodiments, as illustrated in FIG. 5B, the angle θ1 formed by the first side surface 210B and one surface 411-1 of the first standing magnet 411 may be different from the angle θ2 formed by the first side surface 210B and one surface 412-1 of the second standing magnet 412. For example, the angle θ1 formed by the first side surface 210B and one surface 411-1 of the first standing magnet 411 may be smaller than the angle θ2 formed by the first side surface 210B and one surface 412-1 of the second standing magnet 412.

According to various embodiments, the seating portion 230 may be disposed at a position adjacent to the first side surface 210B. Referring to FIG. 5C and FIG. 5D, the seating portion 230 may include a first seating groove 233 in which the first standing magnet 411 is seated and a second seating groove 234 in which the second standing magnet 412 is seated. The first seating groove 233 and the second seating groove 234 may be grooves concavely formed in the seating portion 230. The first seating groove 233 and the second seating groove 234 may be configured to be inclined with respect to the first side surface 210B. Since the first standing magnet 411 and the second standing magnet 412 are respectively seated in the first seating groove 233 and the second seating groove 234 configured to be inclined to the first side surface 210B, the first standing magnet 411 and the second standing magnet 412 may be arranged to be inclined with respect to the first side surface 210B.

According to various embodiments, the electronic device 200 coupled to the cover accessory 300 may have a first standing state (e.g., the state illustrated in (a) of FIG. 5B and FIG. 5C) and a second standing state (e.g., the state illustrated in (b) of FIG. 5B and FIG. 5D). Referring to FIG. 5C, the first standing state may mean a state in which the cover plate 320 of the cover accessory 300 and the housing 210 are inclined at a predetermined angle. In the first standing state, the housing 210 and the mounting plate 310 may form a first angle β1. The second standing state may mean a state in which the cover plate 320 and the housing 210 are inclined at a predetermined angle. In the second standing state, the housing 210 and the mounting plate 310 may form a second angle β2. The first angle β1 may be greater than the second angle β2.

According to various embodiments, in the first standing state as illustrated in FIG. 5C, the first standing magnet 411 may be disposed adjacent to a first cover magnetic body 323 disposed on the cover plate 320. Referring to (a) in FIG. 5C, the first standing magnet 411 disposed in an inclined state with respect to the first side surface 210B of the housing 210 may be disposed substantially parallel to the first cover magnetic body 323 in the first standing state. One surface 411-1 of the first standing magnet 411 adjacent to the first cover magnetic body 323 and one surface 323-1 of the first cover magnetic body 323 adjacent to the first standing magnet 411 may be arranged substantially parallel to each other. In this state, the direction of the magnetic force F₂ acting between the first cover magnetic body 323 and the first standing magnet 411 may be substantially perpendicular to the cover plate 320.

According to various embodiments, as illustrated in (b) in FIG. 5C, one surface 411-1 of the first standing magnet 411 and one surface 323-1 of the first cover magnetic body 323 may form an angle of α1. The angle of α1 may be from about 0 degrees to 15 degrees. In the state as in (b) of FIG. 5C, the angle θ1 between the first side surface 210B and one surface 411-1 of the first standing magnet 411 may be about 20 degrees.

According to various embodiments, in the second standing state as illustrated in FIG. 5D, the second standing magnet 412 may be disposed adjacent to a second cover magnetic body 324 disposed on the cover plate 320. The second cover magnetic body 324 may be a magnet disposed on the cover plate 320 at a position spaced apart from the first cover magnetic body 323. Referring to (a) of FIG. 5D, the second standing magnet 412 disposed in an inclined state with respect to the first side surface 210B of the housing 210 may be disposed substantially parallel to the second cover magnetic body 324 in the second standing state. One surface 412-1 of the second standing magnet 412 adjacent to the second cover magnetic body 324 and one surface 324-1 of the second cover magnetic body 324 adjacent to the second standing magnet 412 may be arranged substantially parallel to each other. In this state, the direction of the magnetic force F₃ acting between the second cover magnetic body 324 and the second standing magnet 412 may be substantially perpendicular to the cover plate 320.

According to various embodiments, as illustrated in (b) in FIG. 5D, one surface 412-1 of the second standing magnet 412 and one surface 324-1 of the second cover magnetic body 324 may form an angle of α2. The angle of α2 may be from about 0 degrees to 15 degrees. In the state as in (b) of FIG. 5D, the angle θ2 between one surface 411-1 of the second standing magnet 411 and the first side surface 210B may be about 35 degrees.

Likewise, in the first standing state, the first side surface 210B of the housing 210 may be fixed to the cover plate 320 by an attractive force between the first standing magnet 411 and the first cover magnetic body 323, and in the second standing state, the first side surface 210B of the housing 210 may be fixed to the cover plate 320 by the magnetic force between the second standing magnet 412 and the second cover magnetic body 324.

According to various embodiments, a shielding member 453 disposed on the first standing magnet 411 and a shielding member 454 disposed on the second standing magnet 412 may shield at least a partial area of the standing magnets 411 and 412. The shielding members 453 and 454 may be made of a material capable of blocking magnetic force. The shielding members 453 and 454 may be made of, for example, a material such as steel plate cold commercial (SPCC). The shielding members 453 and 454 may shield the magnetic forces of the first standing magnet 411 and the second standing magnet 412, respectively, so that the magnetic force of the first standing magnet 411 and the second standing magnet 412 does not affect the electronic components and the display 220 included in the electronic device 200. For example, as illustrated in FIG. 5C, the shielding member 453 disposed in the first standing magnet 411 may be disposed to cover a surface 411-2 facing the center of the electronic device and a surface 411-3 adjacent to the display 220 in the first standing magnet 411. As illustrated in FIG. 5D, the shielding member 454 disposed in the second standing magnet 412 may be disposed to cover a surface 412-2 facing the center of the electronic device 200 and a surface 412-3 adjacent to the display 220 in the second standing magnet 412.

According to still another embodiment, as illustrated in FIG. 5E, the standing magnet 410 may be configured as a single standing magnet 410 without including the first standing magnet 411 and the second standing magnet 412 fixed in a state of being inclined at different angles with respect to the first side surface 210B of the housing 210. In this case, the standing magnet 410 may be hinge-coupled 510 to the seating portion 230. The hinge-coupled 510 standing magnet 410 may be seated in the first seating groove 233 of the seating portion 230 or in the second seating groove 234 by rotation. In the first standing state, as illustrated in (a) of FIG. 5E, the standing magnet 410 may be seated in the first seating groove 233. The standing magnet 410 seated in the first seating groove 233 may be disposed substantially parallel to the first cover magnetic body 323. In such a state, the direction of the magnetic force FA of the standing magnet 410 may be a direction substantially perpendicular to the cover plate 320. In the second standing state, as illustrated in (b) of FIG. 5E, the standing magnet 410 may be seated in the second seating groove 234. The standing magnet 410 seated in the second seating groove 234 may be disposed substantially parallel to the second cover magnetic body 324. In such a state, the direction of the magnetic force FB of the standing magnet 410 may be a direction substantially perpendicular to the cover plate 320.

According to various embodiments, the standing magnet 410 illustrated in FIG. 5E may include the shielding member 451 configured to shield at least a partial area of the standing magnet 410. The shielding member 451 may be made of, for example, a material such as steel plate cold commercial (SPCC). The shielding member 451 may shield the magnetic force of the standing magnet 410 so that the magnetic force of the standing magnet 410 does not affect the electronic component and the display 220 included in the electronic device 200. For example, as illustrated in FIG. 5E, the shielding member 451 may be disposed to cover the surface 410-2 facing the center of the electronic device 200 and the surface 410-3 adjacent to the display 220 in the standing magnet 410.

According to various embodiments, although it was described above that the first seating groove 233 and the second seating groove 234 are disposed in the seating portion 230, the number of seating grooves disposed in the seating portion 230 may be variously changed. The structure of the hinge-coupling 510 between the standing magnet 410 and the seating portion 230 described above may be omitted.

According to various embodiments, the standing magnet 410 may be fixed to and rotated by a shaft (not illustrated) rotated by a rotary motor (not illustrated). The rotation control of the rotary motor may be performed based on the information received via a sensor included in the electronic device. For example, the sensor of the electronic device may measure the degree of the inclination of the electronic device. The rotary motor may be controlled based on the value measured by the sensor so that the standing magnet 410 is parallel to the first cover magnetic body 323 or the second cover magnetic body 324.

According to various embodiments, as illustrated in FIG. 5C, FIG. 5D, and FIG. 5E, the window 290 may be disposed on the upper surface of the display 220 of the electronic device 200 to protect the display 220.

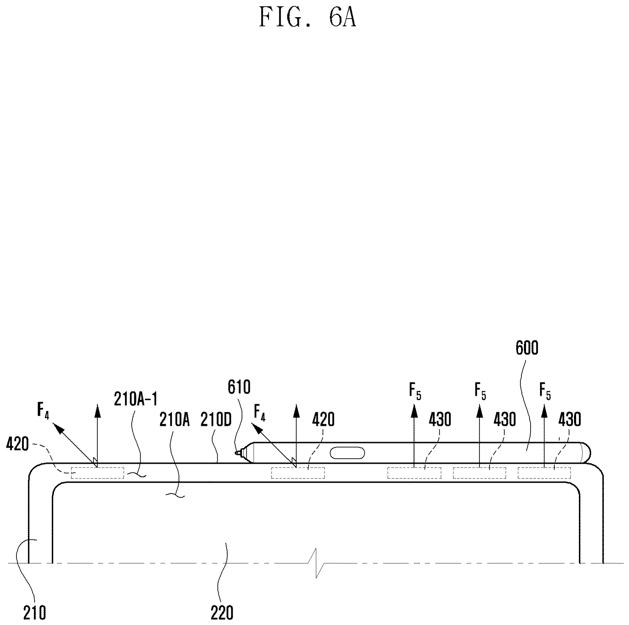

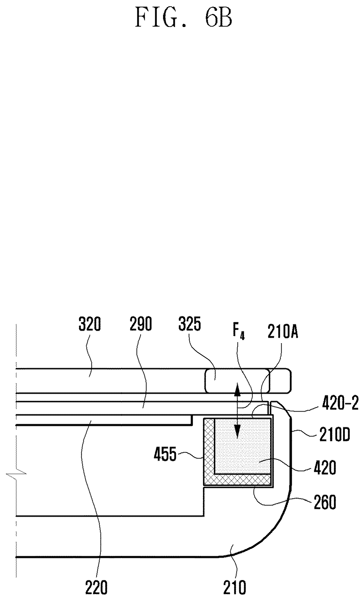

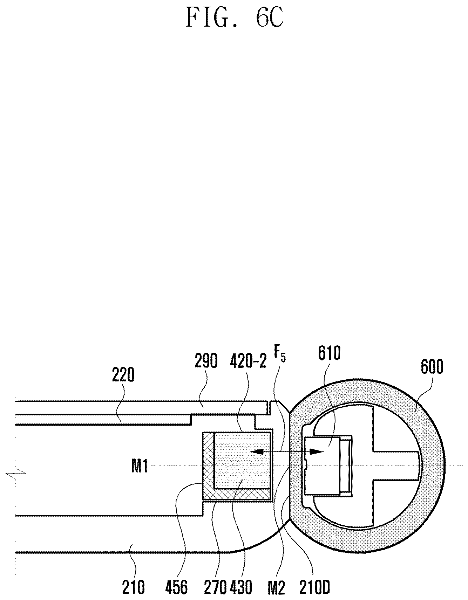

FIG. 6A is a view illustrating an arrangement of a closing magnet and a pen attachment magnet according to various embodiments disclosed herein, FIG. 6B is a cross-sectional view of a component adjacent to a closing magnet according to various embodiments disclosed herein, and FIG. 6C is a cross-sectional view of a component adjacent to a pen attachment magnet according to various embodiments disclosed herein.

According to various embodiments, as illustrated in FIG. 6A, the closing magnet 420 may be disposed adjacent to a fixed magnet 325 of the cover plate 320 in the closed state. Due to the magnetic force between the fixed magnet 325 and the closing magnet 420 in the closed state, the closed state may be maintained. The closing magnet 420 may be disposed adjacent to the front surface 210A of the housing 210 so as to be disposed adjacent to the cover plate 320 configured to cover the front surface 210A of the electronic device 200. The closing magnet 420 may be disposed in a bezel portion 210A-1 in which the display 220 is invisible in the housing 210.

According to various embodiments, as illustrated in FIG. 6A, the pen attachment magnet 430 may be magnetically coupled to a magnetic body 610 included in a device for pen input (e.g., a stylus pen; hereinafter, referred to as a stylus pen) 600. The magnetic body 610 included in the stylus pen 600 may be disposed inside the stylus pen 600 at a position spaced apart from a tip 610 of the stylus pen 600. The pen attachment magnet 430 may be disposed adjacent to the second side surface 210D so that the stylus pen 600 can be fixed to the second side surface (e.g., the side surface 210D of FIG. 6A to FIG. 6C) of the housing 210. The pen attachment magnet 430 may be disposed such that a central axis M1 thereof passes through a substantial center M2 of the second side surface 210D adjacent to the pen attachment magnet 430. When the central axis of the pen attachment magnet 430 is disposed to pass through the center of the second side surface 210D, since the area where the side surface of the stylus pen 600 attached to the pen attachment magnet 430 overlaps the second side surface 210D of the housing 210 increases, the stylus pen 600 may be stably fixed to the second side surface 210D of the electronic device 200.

According to various embodiments, as illustrated in FIG. 6B and FIG. 6C, the closing magnet 420 may be disposed to be close to the front surface 210A of the housing 210, based on the front surface 210A of the housing 210. The closing magnet 420 may be seated on a third seating portion 260 disposed in the housing 210 to be disposed near the front surface 210A of the housing 210. The pen attachment magnet 430 may be disposed farther from the front surface 210A of the housing 210 than the closing magnet 420. The pen attachment magnet 430 may be seated on a fourth seating portion 270 disposed in the housing 210. The closing magnet 420 and the pen attachment magnet 430 may be disposed such that their polar directions are opposite to each other. This makes it possible to prevent the stylus pen 600 from adhering to the closing magnet 420. Accordingly, it is possible to prevent the stylus pen 600 from being attached to the closing magnet 420. The direction of the magnetic force F₄ acting between the closing magnet 420 and the fixed magnet 325 of the cover plate 320 and the direction of the magnetic force F₅ acting between the pen attachment magnet 430 and the stylus pen may be perpendicular to each other.

According to various embodiments, a shielding member 455 disposed to cover at least a partial area of the closing magnet 420 and a shielding member 456 disposed to cover at least a partial area of the pen attachment magnet 430 may shield the magnetic force between the closing magnet 420 and the pen attachment magnet 430. The shielding members 455 and 456 may be made of a material capable of blocking magnetic force. The shielding members 455 and 456 may be made of, for example, a material such as steel plate cold commercial (SPCC). Although the shielding member 451 disposed on the standing magnet 410 described above is disposed to cover a surface (e.g., 410-3 in FIG. 4B) adjacent to the display 220, the shielding member 455 disposed on the closing magnet 420 may not be disposed on a surface 420-2 adjacent to the display 220 so that the closing magnet 420 can be coupled to the cover plate 230 configured to cover the front surface 210A of the electronic device 200.

According to various embodiments, as illustrated in FIG. 6B and FIG. 6C, the window 290 may be disposed on the upper surface of the display 220 of the electronic device 200 to protect the display 220.

An electronic device according to various embodiments disclosed herein may include a housing mounted to a mounting plate of a cover accessory, a display disposed in the housing such that at least a partial area thereof is visible through a front surface of the housing, and a first standing magnet disposed adjacent to a first side surface of the housing, which is substantially perpendicular to the front surface of the housing and is in contact with a cover plate in a first standing state, wherein the first standing state is a state in which the housing is inclined at a first angle with respect to the cover plate of the cover accessory, and the first standing magnet is disposed such that one side thereof is inclined with respect to the first side surface of the housing.

In addition, one surface of the first standing magnet may be disposed substantially parallel to one surface of a first cover magnetic body disposed on the cover plate in the first standing state.

In addition, the electronic device may further include a seating portion which is disposed adjacent to the first side surface of the housing and includes a first seating groove in which the first standing magnet is seated, wherein the first seating groove of the seating portion may be disposed in the seating portion to be inclined with respect to the first side surface of the housing.

In addition, the seating portion may further include a second seating groove configured to be inclined at an angle different from the first seating groove with respect to the first side surface of the housing, wherein the first standing magnet is hinge-coupled to the seating portion to be seated in one of the first seating groove and the second seating groove by rotation according to the hinge-coupling.

In addition, the electronic device may further include a second standing magnet disposed adjacent to the first side surface of the housing, wherein the second standing magnet is disposed such that the angle formed by one surface of the second standing magnet and the first side surface of the housing is different from the angle formed by one surface of the first standing magnet and the first side surface of the housing.

In addition, the seating portion may further include a second seating groove which is configured to be inclined with respect to the first side surface of the housing at an angle different from that of the first seating groove and in which the second standing magnet is seated.

In addition, one surface of the second standing magnet may be disposed substantially parallel to one surface of a second cover magnetic body disposed on the cover plate while being spaced apart from the first cover magnetic body in a second standing state, wherein the second standing state is a state in which the housing is inclined at a second angle with respect to the mounting plate of the cover accessory.

In addition, the second standing magnet may further include a shielding member configured to shield at least a partial area of the second standing magnet.

In addition, the first standing magnet may further include a shielding member configured to shield at least a partial area of the first standing magnet.

In addition, the electronic device may further include a closing magnet disposed adjacent to the front surface of the housing to fix the cover accessory to the housing in a closed state, and a pen attachment magnet disposed adjacent to a second side surface, which is at least one of the remaining side surfaces of the housing, excluding the first side surface of the housing, so that a stylus pen is fixed to the side surface of the housing, wherein the closed state is a state in which the cover plate of the cover accessory covers the front surface of the housing.

An electronic device according to various embodiments disclosed herein may include a housing mounted to a mounting plate of a cover accessory and including a first side surface and a second side surface which is at least one of remaining side surfaces excluding the first side surface, a display disposed in the housing such that at least a partial area thereof is visible through a front surface of the housing, which is substantially perpendicular to the first side surface, a closing magnet disposed adjacent to the front surface of the housing to fix the cover accessory to the housing in a closed state, and a pen attachment magnet disposed adjacent to the second side surface of the housing so that a stylus pen is fixed to the side surface of the housing, wherein the closed state is a state in which the cover plate of the cover accessory covers the front surface of the housing.

In addition, the electronic device may further include a first standing magnet disposed adjacent to the first side surface of the housing, which is substantially perpendicular to the front surface of the housing and is in contact with the cover plate in a first standing state, wherein the first standing state is a state in which the housing is inclined at a first angle with respect to the mounting plate of the cover accessory, and the first standing magnet is disposed such that one side thereof is inclined with respect to the first side surface of the housing.

In addition, one surface of the first standing magnet may be disposed substantially parallel to one surface of a first cover magnetic body disposed on the cover plate in the first standing state.

In addition, the electronic device may further include a seating portion disposed adjacent to the first side surface of the housing and including a first seating groove in which the first standing magnet is seated, wherein the first seating groove of the seating portion is configured in the seating portion to be inclined with respect to the first side surface of the housing.

In addition, the seating portion may further include a second seating groove configured to be inclined with respect to the first side surface of the housing at an angle different from that of the first seating groove, wherein the first standing magnet is hinge-coupled to the seating portion to be seated in one of the first seating groove and the second seating groove by rotation according to the hinge-coupling.

In addition, the electronic device may further include a second standing magnet disposed adjacent to the first side surface of the housing, wherein the second standing magnet is disposed such that the angle formed by one surface of the second standing magnet and the first side surface of the housing is different from the angle formed by one surface of the first standing magnet and the first side surface of the housing.

In addition, the seating portion may further include a second seating groove which is configured to be inclined with respect to the first side surface of the housing at an angle different from that of the first seating groove and in which the second standing magnet is seated.

In addition, one surface of the second standing magnet may be disposed substantially parallel to one surface of a second cover magnetic body disposed on the cover plate while being spaced apart from the first cover magnetic body in a second standing state, wherein the second standing state is a state in which the housing is inclined at a second angle with respect to the mounting plate of the cover accessory.

In addition, the first standing magnet may further include a shielding member configured to shield at least a partial area of the first standing magnet.

In addition, the second standing magnet may further include a shielding member configured to shield at least a partial area of the second standing magnet.

The embodiments disclosed in the specification and drawings are merely provided for specific examples to easily explain the technical content according to the embodiments disclosed herein and help the understanding of the embodiments disclosed herein, and are not intended to limit the scope of the embodiments disclosed herein. Therefore, the scope of the various embodiments disclosed herein should be construed that all changes or modified forms derived based on the technical idea of various embodiments disclosed herein in addition to the embodiments disclosed herein are included in the scope of the various embodiments disclosed herein.

## Claims

1. An electronic device (200) comprising:
a housing (210) mounted to a mounting plate (310) of a cover accessory (300);
a display (220) disposed in the housing (210) such that at least a partial area thereof is visible through a front surface of the housing (210A);
a first standing magnet (411) disposed adjacent to a first side surface (210B) of the housing (210), which is substantially perpendicular to the front surface (210A) of the housing (210) and is in contact with a cover plate (320) of the cover accessory (300) in a first standing state and a second standing state, and
a second standing magnet (412) disposed adjacent to the first side surface (210B) of the housing (210),
wherein the first standing state is a state in which the housing (210) is inclined at a first angle with respect to the cover plate (320) of the cover accessory (300) and the second standing state is a state in which the housing (210) is inclined at a second angle with respect to the cover plate (320) of the cover accessory (300),
wherein the first standing magnet (411) is disposed such that one side (411-1) thereof is inclined with respect to the first side surface (210B) of the housing (210) and the second standing magnet (412) is disposed such that the angle formed by one surface (412-1) of the second standing magnet (412) and the first side surface (210B) of the housing (210) is different from the angle formed by the one surface (411-1) of the first standing magnet (411) that corresponds to the one surface (412-1) of the second standing magnet (412) and the first side surface (210B) of the housing (210),
wherein the one surface (411-1) of the first standing magnet (411) is disposed substantially parallel to one surface of a first cover magnetic body (323) disposed on the cover plate (320) of the cover accessory (300) in the first standing state, and
wherein the one surface (412-1) of the second standing magnet (412) that corresponds to the one surface (411-1) of the first standing magnet (411) is disposed substantially parallel to one surface of a second cover magnetic body (324) disposed on the cover plate (320) of the cover accessory (300) which is spaced apart from the first cover magnetic body (323) in the second standing state.

2. The electronic device of claim 1, further comprising a seating portion which is disposed adjacent to the first side surface of the housing and includes a first seating groove in which the first standing magnet is seated,
wherein the first seating groove of the seating portion is disposed in the seating portion to be inclined with respect to the first side surface of the housing.

3. The electronic device of claim 2, wherein the seating portion further includes a second seating groove which is configured to be inclined with respect to the first side surface of the housing at an angle different from that of the first seating groove and in which the second standing magnet is seated.

4. The electronic device of claim 1, wherein the second standing magnet further includes a shielding member configured to shield at least a partial area of the second standing magnet.

5. The electronic device of claim 1, wherein the first standing magnet further includes a shielding member configured to shield at least a partial area of the first standing magnet.

6. The electronic device of claim 1, further comprising:
a closing magnet disposed adjacent to the front surface of the housing to fix the cover accessory to the housing in a closed state; and
a pen attachment magnet disposed adjacent to a second side surface, which is at least one of the remaining side surfaces of the housing, excluding the first side surface of the housing, so that a stylus pen can be fixed to the side surface of the housing,
wherein the closed state is a state in which the cover plate of the cover accessory covers the front surface of the housing.

## Patentansprüche

1. Elektronische Vorrichtung (200), umfassend:
ein Gehäuse (210), das an einer Montageplatte (310) eines Abdeckzubehörs (300) montiert ist;
eine Anzeige (220), die derart in dem Gehäuse (210) angeordnet ist, dass mindestens eine Teilfläche davon durch eine Vorderoberfläche des Gehäuses (210A) sichtbar ist;
einen ersten stehenden Magneten (411), der benachbart zu einer ersten Seitenoberfläche (210B) des Gehäuses (210) angeordnet ist, die im Wesentlichen senkrecht zu der Vorderoberfläche (210A) des Gehäuses (210) ist und in einem ersten stehenden Zustand und einem zweiten stehenden Zustand mit einer Abdeckplatte (320) des Abdeckzubehörs (300) in Kontakt steht, und
einen zweiten stehenden Magneten (412), der benachbart zu der ersten Seitenoberfläche (210B) des Gehäuses (210) angeordnet ist,
wobei der erste stehende Zustand ein Zustand ist, in dem das Gehäuse (210) in einem ersten Winkel in Bezug auf die Abdeckplatte (320) des Abdeckzubehörs (300) geneigt ist, und der zweite stehende Zustand ein Zustand ist, in dem das Gehäuse (210) in einem zweiten Winkel in Bezug auf die Abdeckplatte (320) des Abdeckzubehörs (300) geneigt ist,
wobei der erste stehende Magnet (411) derart angeordnet ist, dass eine Seite (411-1) davon in Bezug auf die erste Seitenoberfläche (210B) des Gehäuses (210) geneigt ist, und der zweite stehende Magnet (412) derart angeordnet ist, dass der Winkel, der durch eine Oberfläche (412-1) des zweiten stehenden Magneten (412) und die erste Seitenoberfläche (210B) des Gehäuses (210) gebildet wird, sich von dem Winkel unterscheidet, der durch die eine Oberfläche (411-1) des ersten stehenden Magneten (411), die der einen Oberfläche (412-1) des zweiten stehenden Magneten (412) entspricht, und die erste Seitenoberfläche (210B) des Gehäuses (210) gebildet wird,
wobei in dem ersten stehenden Zustand die eine Oberfläche (411-1) des ersten stehenden Magneten (411) im Wesentlichen parallel zu einer Oberfläche eines ersten Abdeckmagnetkörpers (323) angeordnet ist, der auf der Abdeckplatte (320) des Abdeckzubehörs (300) angeordnet ist, und
wobei in dem zweiten stehenden Zustand die eine Oberfläche (412-1) des zweiten stehenden Magneten (412), die der einen Oberfläche (411-1) des ersten stehenden Magneten (411) entspricht, im Wesentlichen parallel zu einer Oberfläche eines zweiten Abdeckmagnetkörpers (324) angeordnet ist, der auf der Abdeckplatte (320) des Abdeckzubehörs (300) angeordnet ist, die von dem ersten Abdeckmagnetkörper (323) beabstandet ist.

2. Elektronische Vorrichtung nach Anspruch 1, ferner umfassend einen Sitzabschnitt, der benachbart zu der ersten Seitenoberfläche des Gehäuses angeordnet ist und eine erste Sitznut einschließt, in der der erste stehende Magnet sitzt,
wobei die erste Sitznut des Sitzabschnitts in dem Sitzabschnitt angeordnet ist, um in Bezug auf die erste Seitenoberfläche des Gehäuses geneigt zu sein.

3. Elektronische Vorrichtung nach Anspruch 2, wobei der Sitzabschnitt ferner eine zweite Sitznut einschließt, die dazu konfiguriert ist, in Bezug auf die erste Seitenoberfläche des Gehäuses in einem Winkel geneigt zu sein, der sich von dem der ersten Sitznut unterscheidet, und in der der zweite stehende Magnet sitzt.

4. Elektronische Vorrichtung nach Anspruch 1, wobei der zweite stehende Magnet ferner ein Abschirmelement einschließt, das dazu konfiguriert ist, mindestens eine Teilfläche des zweiten stehenden Magneten abzuschirmen.

5. Elektronische Vorrichtung nach Anspruch 1, wobei der erste stehende Magnet ferner ein Abschirmelement einschließt, das dazu konfiguriert ist, mindestens eine Teilfläche des ersten stehenden Magneten abzuschirmen.

6. Elektronische Vorrichtung nach Anspruch 1, ferner umfassend:
einen Schließmagneten, der benachbart zu der Vorderoberfläche des Gehäuses angeordnet ist, um das Abdeckzubehör in einem geschlossenen Zustand an dem Gehäuse zu fixieren; und
einen Stiftanbringungsmagneten, der benachbart zu einer zweiten Seitenoberfläche, die mindestens eine der verbleibenden Seitenoberflächen des Gehäuses ist, mit Ausnahme der ersten Seitenoberfläche des Gehäuses, angeordnet ist, sodass ein Eingabestift an der Seitenoberfläche des Gehäuses fixiert werden kann,
wobei der geschlossene Zustand ein Zustand ist, in dem die Abdeckplatte des Abdeckzubehörs die Vorderoberfläche des Gehäuses abdeckt.

## Revendications

1. Dispositif électronique (200) comprenant :
un boîtier (210) monté sur une plaque de montage (310) d'un accessoire de couverture (300) ;
un dispositif d'affichage (220) disposé dans le boîtier (210) de sorte qu'au moins une zone partielle de celui-ci est visible à travers une surface avant du boîtier (210A) ;
un premier aimant dressé (411) disposé adjacent à une première surface latérale (210B) du boîtier (210), qui est sensiblement perpendiculaire à la surface avant (210A) du boîtier (210) et est en contact avec une plaque de couverture (320) de l'accessoire de couverture (300) dans un premier état dressé et un second état dressé, et
un second aimant dressé (412) disposé adjacent à la première surface latérale (210B) du boîtier (210),
dans lequel le premier état dressé est un état où le boîtier (210) est incliné à un premier angle par rapport à la plaque de couverture (320) de l'accessoire de couverture (300) et le second état dressé est un état où le boîtier (210) est incliné à un second angle par rapport à la plaque de couverture (320) de l'accessoire de couverture (300),
dans lequel le premier aimant dressé (411) est disposé de sorte qu'un côté (411-1) de celui-ci est incliné par rapport à la première surface latérale (210B) du boîtier (210) et le second aimant dressé (412) est disposé de sorte que l'angle formé par une surface (412-1) du second aimant dressé (412) et la première surface latérale (210B) du boîtier (210) est différent de l'angle formé par l'une surface (411-1) du premier aimant dressé (411) qui correspond à l'une surface (412-1) du second aimant dressé (412) et à la première surface latérale (210B) du boîtier (210),
dans lequel l'une surface (411-1) du premier aimant dressé (411) est disposée sensiblement parallèlement à une surface d'un premier corps magnétique de couverture (323) disposé sur la plaque de couverture (320) de l'accessoire de couverture (300) dans le premier état dressé, et
dans lequel l'une surface (412-1) du second aimant dressé (412) qui correspond à l'une surface (411-1) du premier aimant dressé (411) est disposée sensiblement parallèlement à une surface d'un second corps magnétique de couverture (324) disposé sur la plaque de couverture (320) de l'accessoire de couverture (300) qui est espacé du premier corps magnétique de couverture (323) dans le second état dressé.

2. Dispositif électronique de la revendication 1, comprenant en outre une partie de soutien qui est disposée de manière adjacente à la première surface latérale du boîtier et comprend une première rainure de soutien où le premier aimant dressé est logé,
dans lequel la première rainure de soutien de la partie de soutien est disposée dans la partie de soutien pour être inclinée par rapport à la première surface latérale du boîtier.

3. Dispositif électronique de la revendication 2, dans lequel la partie de soutien comprend en outre une seconde rainure de soutien qui est conçue pour être inclinée par rapport à la première surface latérale du boîtier à un angle différent de celui de la première rainure de soutien et où le second aimant dressé est soutenu.

4. Dispositif électronique de la revendication 1, dans lequel le second aimant dressé comprend en outre un élément de protection conçu pour protéger au moins une zone partielle du second aimant dressé.

5. Dispositif électronique de la revendication 1, dans lequel le premier aimant dressé comprend en outre un élément de protection conçu pour protéger au moins une zone partielle du premier aimant dressé.

6. Dispositif électronique de la revendication 1, comprenant en outre :
un aimant de fermeture disposé adjacent à la surface avant du boîtier pour fixer l'accessoire de couverture au boîtier dans un état fermé ; et
un aimant de fixation de stylet disposé adjacent à une seconde surface latérale, qui est au moins l'une des surfaces latérales restantes du boîtier, à l'exclusion de la première surface latérale du boîtier, de sorte qu'un crayon stylet peut être fixé à la surface latérale du boîtier,
dans lequel l'état fermé est un état où la plaque de couverture de l'accessoire de couverture recouvre la surface avant du boîtier.
